# EUROPÄISCHE PATENTANMELDUNG

(11) **EP 4 610 763 A1**
(43) Veröffentlichungstag der Anmeldung: **03.09.2025**
(21) Anmeldenummer: 24160419.8
(22) Anmeldetag: 29.02.2024
(51) Int. Cl.: G05D 1/229, G05D 1/646, G05D 1/65

(54) **VERFAHREN ZUM STEUERN EINES UNBEMANNTEN FLUGGERÄTS, STEUERSYSTEM FÜR EIN UNBEMANNTES FLUGGERÄT, COMPUTERPROGRAMMPRODUKT**

(71) Anmelder: mdGroup Germany GmbH, 57072 Siegen (DE)
(72) Erfinder: Maczijewski, Janis, 57072 Siegen (DE)
(74) Vertreter: Glawe, Delfs, Moll

(57) **Zusammenfassung**

Verfahren zum Steuern eines unbemannten Fluggeräts (14), bei dem Steuerkomponenten (18) des Fluggeräts (14) mit Steuerbefehlen angesteuert werden, die von einer Steuereinheit (26) an die Steuerkomponenten (18) gesendet werden. Die Steuereinheit (26) ermittelt die Steuerbefehle anhand von Planungsvorgaben (37, 38). Die Planungsvorgaben (37, 38) werden in einem Planungsmodul (24) errechnet. Die Steuereinheit (26) und das Planungsmodul (24) werden mit einer gemeinsamen Zeitskala (29, 32) betrieben. Mit jeder Planungsvorgabe (37, 38) werden für eine Mehrzahl von Zeitpunkten Parametervorgaben (37a, 37b, 37c, 38a, 38b, 38c) für Flugparameter des Fluggeräts (14) gesetzt, wobei in einer ersten Steuerphase (43) das Fluggerät (14) gemäß einer ersten Planungsvorgabe (37) betrieben wird, wobei die erste Planungsvorgabe (37) Parametervorgaben (37a, 37b, 37c) für Zeitpunkte zwischen einem ersten Anfangszeitpunkt (T1A) und einem ersten Endzeitpunkt (T1E) setzt, wobei eine zweite Planungsvorgabe (38) Parametervorgaben (38a, 38b, 38c) für Zeitpunkte zwischen einem zweiten Anfangszeitpunkt (T2A) und einem zweiten Endzeitpunkt (T2E) setzt, wobei der zweite Anfangszeitpunkt (T2A) vor dem ersten Endzeitpunkt (T1E) liegt, wobei zu einem Übergangszeitpunkt (TS), der zwischen dem zweiten Anfangszeitpunkt (T2A) und dem ersten Endzeitpunkt (T1E) liegt, die Steuereinheit (26) von der ersten Planungsvorgabe (37) zu der zweiten Planungsvorgabe (38) wechselt, sodass in einer zweiten Steuerphase (44) das Fluggerät (14) gemäß den Parametervorgaben (38a, 38b, 38c) der zweiten Planungsvorgabe (38) betrieben wird. Die Erfindung betrifft auch ein Steuersystem für ein unbemanntes Fluggerät und ein Computerprogrammprodukt.

## Beschreibung

Die Erfindung betrifft ein Verfahren zum Steuern eines unbemannten Fluggeräts sowie eine Steuersystem für ein unbemanntes Fluggerät. Die Erfindung betrifft auch ein Computerprogrammprodukt.

Flugmissionen unbemannter Fluggeräte können unter der Kontrolle eines Planungsmoduls durchgeführt werden. Das Planungsmodul ermittelt eine Planungsvorgabe, die an eine Steuereinheit des unbemannten Fluggeräts übermittelt wird. Die Steuereinheit wertet die Planungsvorgabe aus und leitet daraus Steuerbefehle für Steuerkomponenten des Fluggeräts ab. Steuerkomponenten des Fluggeräts können beispielsweise Antriebe oder Lenkeinrichtungen sein, mit denen die Fluggeschwindigkeit und die Flugrichtung beeinflusst werden können.

Ein wesentlicher Teil der Planungsvorgaben besteht bislang in Vorgaben für die Position des Fluggeräts. Eine Vorgabe könnte beispielsweise sein, dass das Fluggerät eine bestimmte Position ansteuern soll oder sich zu einem bestimmten Zeitpunkt in einer bestimmten Position befinden soll. Bei einem solchen Steuerkonzept können Probleme auftreten, wenn die Koordination zwischen dem Planungsmodul und der Steuereinheit des Fluggeräts nicht einwandfrei ist. Beispielsweise könnte es vorkommen, dass das Fluggerät sich nicht zum richtigen Zeitpunkt in einer Position befindet, in der es gemäß der aktuellen Planungsvorgabe sein sollte, und dass deswegen eine zweite Planungsvorgabe nicht zum tatsächlichen Zustand des Fluggeräts passt. Möglich ist auch, dass das Erstellen oder Übermitteln einer zweiten Planungsvorgabe sich verzögert, sodass die Planungsvorgabe zu dem Zeitpunkt, zu dem sie bei dem Fluggerät eingeht, nicht mehr passend ist.

Der Erfindung liegt die Aufgabe zugrunde, ein Verfahren zum Steuern eines unbemannten Fluggeräts, ein Steuersystem für ein unbemanntes Fluggerät sowie ein Computerprogrammprodukt vorzustellen, mit denen diese Nachteile vermindert werden. Die Aufgabe wird gelöst mit den Merkmalen der unabhängigen Ansprüche. Vorteilhafte Ausführungsformen sind in den Unteransprüchen angegeben.

Bei dem erfindungsgemäßen Verfahren zum Steuern eines unbemannten Fluggeräts werden Steuerkomponenten des Fluggeräts mit Steuerbefehlen angesteuert, die von einer Steuereinheit an die Steuerkomponenten gesendet werden. Die Steuereinheit ermittelt die Steuerbefehle anhand von Planungsvorgaben, wobei die Planungsvorgaben in einem Planungsmodul errechnet werden. Die Steuereinheit und das Planungsmodul werden mit einer gemeinsamen Zeitskala betrieben. Mit jeder Planungsvorgabe werden für eine Mehrzahl von Zeitpunkten Parametervorgaben für Flugparameter des Fluggeräts gesetzt. In einer ersten Steuerphase wird das Fluggerät gemäß einer ersten Planungsvorgabe betrieben, wobei die erste Planungsvorgabe Parametervorgaben für Zeitpunkte zwischen einem ersten Anfangszeitpunkt und einem ersten Endzeitpunkt setzt. Eine zweite Planungsvorgabe setzt Parametervorgaben für Zeitpunkte zwischen einem zweiten Anfangszeitpunkt und einem zweiten Endzeitpunkt, wobei der zweite Anfangszeitpunkt vor dem ersten Endzeitpunkt liegt. Zu einem Übergangszeitpunkt, der zwischen dem zweiten Anfangszeitpunkt und dem ersten Endzeitpunkt liegt, wechselt die Steuereinheit von der ersten Planungsvorgabe zu der zweiten Planungsvorgabe, sodass in einer zweiten Steuerphase das Fluggerät gemäß den Parametervorgaben der zweiten Planungsvorgabe betrieben wird.

Mit der Planungsvorgabe werden Parametervorgaben für Flugparameter des Fluggeräts gesetzt. Zu den Flugparametern gehören solche Größen, auf die mit den Steuerkomponenten des Fluggeräts direkt Einfluss genommen werden kann. Flugparameter sind beispielsweise die Flugrichtung, die Geschwindigkeit des Fluggeräts und die Beschleunigung des Fluggeräts, die durch geeignete Ansteuerung der Steuerkomponenten des Fluggeräts direkt beeinflusst werden können. Nicht zu den Flugparametern im Sinne der Erfindung gehört die Position des Fluggeräts. Es ist ein wesentliches Element der Erfindung, dass mit einer Planungsvorgabe keine unmittelbaren Vorgaben für die Position des Fluggeräts gesetzt werden.

In der ersten Planungsvorgabe und der zweiten Planungsvorgabe können die Parametervorgaben mit Zeitpunkten verknüpft sein, die auf der gemeinsamen Zeitskala definiert sind. Die Steuereinheit des Fluggeräts kann der Planungsvorgabe dann entnehmen, zu welchen Zeitpunkten die vorgegebenen Parametervorgaben für die Flugparameter des Fluggeräts gelten. Indem die Steuereinheit des Fluggeräts mit derselben Zeitskala betrieben wird wie das Planungsmodul, können die in der Planungsvorgabe enthaltenen Zeitpunkte anhand der Zeitskala richtig zugeordnet werden. Die Zeitskala kann beispielsweise die Zeitskala eines globalen satellitengestützten Navigationssystems (GNSS) sein. Ein Beispiel für ein GNSS ist das GPS-System. Die Steuereinheit kann eine Parametervorgabe zu genau dem Zeitpunkt der gemeinsamen Zeitskala anwenden, zu dem es das Planungsmodul vorgesehen hat. Auf diese Weise können Unsicherheiten vermieden werden, die entstehen, wenn im Stand der Technik die Umsetzung einer Planungsvorgabe davon abhängt, zu welchem Zeitpunkt die Planungsvorgabe bei der Steuereinheit eingeht.

Die Zeitspanne, in der das Fluggerät gemäß den Parametervorgaben der ersten Planungsvorgabe betrieben wird, wird als erste Steuerphase bezeichnet. Das Planungsmodul kann die erste Steuerphase nutzen, um die zweite Planungsvorgabe zu errechnen. Das Erstellen der zweiten Planungsvorgabe in dem Planungsmodul sollte vor dem Endzeitpunkt der ersten Planungsvorgabe abgeschlossen sein, damit die zweite Planungsvorgabe rechtzeitig vor dem Endzeitpunkt der ersten Steuerphase an die Steuereinheit des Fluggeräts übertragen werden kann. Durch den Überlappungszeitraum zwischen der ersten Planungsvorgabe und der zweiten Planungsvorgabe stehen zu jedem Zeitpunkt Parametervorgaben für die Steuereinheit zur Verfügung. Es ist nicht erforderlich, dass die Steuereinheit die erste Planungsvorgabe bis zu ihrem Endzeitpunkt befolgt. Vielmehr kann die Steuereinheit zur zweiten Planungsvorgabe überwechseln, bevor der Endzeitpunkt der ersten Planungsvorgabe erreicht ist. In einer Ausführungsform erfolgt der Wechsel der Steuereinheit von der ersten Planungsvorgabe zu der zweiten Planungsvorgabe unmittelbar, nachdem die zweite Planungsvorgabe eingegangen ist. Da die zweite Planungsvorgabe anhand aktueller Informationen erzeugt werden konnte, kann angenommen werden, dass die zweite Planungsvorgabe für den Überlappungszeitraum eine bessere Qualität als die erste Planungsvorgabe, weswegen der Wechsel zur zweiten Planungsvorgabe so früh wie möglich erfolgen sollte.

Die Planungsvorgabe bezieht sich auf einen Ausschnitt der Flugmission, wobei der Beginn einer initialen Planungsvorgabe vorzugsweise mit dem Startpunkt der Flugmission zusammenfällt. Die gesamte Flugmission kann mit einer Folge von Planungsvorgaben abgedeckt werden, wobei es - abgesehen von der initialen Planungsvorgabe - für jede Planungsvorgabe einen Überlappungszeitraum gibt, in dem die Planungsvorgabe mit einer vorangegangenen Planungsvorgabe überlappt. Jedes Paar aus zwei auf diese Weise aufeinanderfolgenden Planungsvorgaben entspricht einer ersten Planungsvorgabe und einer zweiten Planungsvorgabe im Sinne der Erfindung.

Innerhalb eines Planungsintervalls, das mit einer Planungsvorgabe abgedeckt wird, können mehrere Zeitpunkte liegen, für die die das Planungsmodul Parametervorgaben errechnet. Ein Planungsintervall kann sich beispielsweise über einen Zeitraum zwischen 5 s und 20 s erstrecken. Innerhalb des Planungsintervalls können beispielsweise zwischen 5 und 50 Zeitpunkte liegen, für die Parametervorgaben errechnet werden. Falls nur für diskrete Zeitpunkte Parametervorgaben errechnet werden, kann eine zeitlich kontinuierliche Vorgabe für die Parametervorgaben erzeugt werden, indem die für die diskreten Zeitpunkte errechneten Parametervorgaben mit einer Spline-Funktion interpoliert werden. Als Spline-Funktion wird eine Funktion bezeichnet, die stückweise aus Polynomen zusammengesetzt ist und die an bestimmten diskreten Stellen vorgegebene Werte annimmt. Die Spline-Funktion kann so erstellt werden, dass sie zu den diskreten Zeitpunkten mit den errechneten Parametervorgaben übereinstimmt. Die Spline-Funktion kann so definiert sein, dass der Spline mindestens einmal, vorzugsweise mindestens zweimal stetig differenzierbar ist. Die Spline-Funktion kann so definiert sein, dass sie sich vom Anfang des Planungsintervalls, also vom Anfangszeitpunkt der Planungsvorgabe, bis zum Ende des Planungsintervalls, also zum Endzeitpunkt der Planungsvorgabe erstreckt. Anhand der Spline-Funktion stehen für jeden Zeitpunkt innerhalb des Planungsintervalls Parametervorgaben zur Verfügung, an denen sich die Steuereinheit des Fluggeräts orientieren kann.

Das Planungsmodul kann dazu ausgelegt sein, externe Daten zu verarbeiten, um die Planungsvorgabe zu errechnen. Zu den externen Daten können geographische Informationen gehören, die für die Flugroute relevant sind. Aus geographischen Informationen kann sich beispielsweise ergeben, dass es auf der Flugroute Hindernisse gibt, die umflogen werden müssen. Zu den externen Daten können Umgebungsinformationen gehören, wie beispielsweise Informationen über das Wetter oder die Windrichtung. Zu den externen Daten können organisatorische Informationen gehören, wie beispielsweise Informationen über Sperrgebiete, in denen das Fluggerät sich nicht aufhalten darf.

Die externen Daten für eine vorgesehene Flugmission können manuell eingegeben werden und/oder in einem automatischen Vorgang erzeugt oder übermittelt werden. Das Planungsmodul kann die Informationen zur vorgesehenen Flugmission in eine Trajektorie umsetzen, wobei geographische Informationen, Umgebungsinformationen und/oder organisatorische Informationen als Randbedingungen berücksichtigt werden können. Jede Planungsvorgabe kann sich auf einen Abschnitt der Trajektorie beziehen.

Es kann ein Rückkanal bestehen für die Übertragung von Informationen von der Steuereinheit des Fluggeräts zu dem Planungsmodul. Der Kanal kann dazu ausgelegt sein, verschiedene Informationen von dem Fluggerät zu dem Planungsmodul übertragen werden. Insbesondere können die über den Rückkanal von dem Fluggerät zu dem Planungsmodul übertragenen Daten Positionsdaten umfassen. Die Positionsdaten können die tatsächliche Position des Fluggeräts zu einem bestimmten in der Vergangenheit liegenden Zeitpunkt repräsentieren. Die über den Rückkanal übertragenen Positionsdaten können mit einem auf der gemeinsamen Zeitskala definierten Zeitstempel versehen sein, sodass aus den übertragenen Daten hervorgeht, zu welchem Zeitpunkt das Fluggerät in der betreffenden Position war. Eine Folge von Positionsdaten über verschiedene in der Vergangenheit liegende Positionen des Fluggeräts kann eine Eingangsgröße für das Planungsmodul bilden, die in dem Planungsmodul verarbeitet wird, um eine Planungsvorgabe zu errechnen. Auch andere Daten, die im Betrieb des Fluggeräts gewonnen werden, können über den Rückkanal übertragen werden. Dazu gehören beispielsweise Informationen über Hindernisse, die das Fluggerät in seiner Umgebung detektiert, oder Messwerte über Umgebungsbedingungen. Das Planungsmodul kann dazu ausgelegt sein, diese Daten zusätzlich oder alternativ zu den Positionsdaten zu verarbeiten, um eine Planungsvorgabe zu errechnen.

Ein Wechsel der Steuereinheit von einer ersten Planungsvorgabe zu einer zweiten Planungsvorgabe kann einhergehen mit einer sprunghaften Änderung in einer Parametervorgabe für einen Flugparameter des Fluggeräts. Sprunghafte Änderungen eines Flugparameters, wie eine sprunghafte Änderung der Fluggeschwindigkeit, eine sprunghafte Änderung der Beschleunigung oder eine sprunghafte Änderung der Flugrichtung können dazu führen, dass das Fluggerät unnötig stark belastet wird oder dass der Flugzustand nicht mehr stabil ist. Um solche unerwünschten Auswirkungen zu verhindern, kann die Steuereinheit so eingerichtet sein, dass eine sprunghafte Änderung in einer Parametervorgabe nicht ungedämpft in eine sprunghafte Änderung eines Steuerbefehls für eine Steuerkomponenten des Fluggeräts umgesetzt wird.

Das Verfahren kann so durchgeführt werden, dass die Parametervorgaben in einer Planungsvorgabe sich auf die Flugparameter Flugrichtung, Geschwindigkeit, Beschleunigung beschränken, dass also keine Parametervorgaben für andere Größen des Fluggeräts gemacht werden. Da die Geschwindigkeit und die Beschleunigung nicht unabhängig voneinander sind, kann eine Darstellungsform gewählt werden, in der die Geschwindigkeit und die Beschleunigung miteinander korreliert sind. Beispielsweise kann die Geschwindigkeit als Integral der Beschleunigung dargestellt werden.

Die Parametervorgaben können als Vektoren in einem dreidimensionalen Koordinatensystem dargestellt werden. Mit dem Koordinatensystem können die Achsen des Raums aufgespannt werden. Ein Vektor innerhalb eines solchen Koordinatensystems kann den Betrag und die Richtung einer Geschwindigkeit oder den Betrag und die Richtung einer Beschleunigung repräsentieren. Die zeitliche Entwicklung der Vektoren kann aus der Spline-Funktion abgeleitet werden. In einer Ausführungsform wird die Geschwindigkeit-Spline-Funktion als mathematisches integral der Beschleunigung-Spline-Funktion konstruiert.

Der Steuereinheit kann dazu ausgelegt sein, den Übergang von der ersten Planungsvorgabe zu der zweiten Planungsvorgabe unter Anwendung einer vorgegebenen begrenzten Änderungsrate zu vollziehen. Beispielsweise kann eine Rampe vorgegeben sein, entlang derer die Vorgabe für eine Steuerkomponente des Fluggeräts von einem alten Sollwert zu einem neuen Sollwert geführt wird. Für die Flugrichtung kann vorgegeben sein, dass die Flugrichtung sich um nicht mehr als einen Maximalwert pro Zeiteinheit ändern darf. Der Maximalwert kann in Grad angegeben sein. Beispielsweise kann vorgegeben sein, dass die Flugrichtung sich um nicht mehr als 5°/s ändern darf. Entsprechende Maximalwerte können für die Änderung der Fluggeschwindigkeit und/oder für die Änderung der Beschleunigung vorgegeben sein.

Die Steuereinheit kann dazu ausgelegt sein, das Fluggerät in einen Sicherheitszustand zu bringen, wenn der Steuereinheit zum ersten Endzeitpunkt keine zweite Planungsvorgabe vorliegt. Ein solcher Zustand kann beispielsweise eintreten, wenn das Berechnen der zweiten Planungsvorgabe zu viel Zeit in Anspruch genommen hat oder es Probleme bei der Übertragung der zweiten Planungsvorgabe von dem Planungsmodul an die Steuereinheit gegeben hat. Der Sicherheitszustand kann so gestaltet sein, dass keine Gefahr von dem Fluggerät ausgeht und dass auch das Fluggeräts selbst keiner Gefahr ausgesetzt ist. Beispielsweise kann die Steuereinheit das Fluggerät in einen statischen Zustand bringen, in dem es in seiner Position bleibt. Möglich wäre auch, dass das Fluggerät unter Nutzung von bordeigenen Sensoren zu einem Landeplatz gesteuert wird. Nach Empfang einer neuen Planungsvorgabe kann die Steuereinheit an den vorherigen Betrieb anknüpfen und die Flugmission fortsetzen.

Das Planungsmodul kann ein Bestandteil des unbemannten Fluggeräts sein. Das Planungsmodul nimmt dann an der Flugmission des Fluggeräts teil. Das Planungsmodul kann über Kabel an die Steuereinheit des unbemannten Fluggeräts angeschlossen sein. Wird eine Flugmission anhand externer Daten erstellt, so können diese Daten über eine Funkverbindung zu dem Planungsmodul übertragen werden.

In einer alternativen Ausführungsform ist das Planungsmodul eine baulich von dem unbemannten Fluggerät getrennte Einheit. In diesem Fall nimmt das Planungsmodul nicht an der Flugmission des Fluggeräts teil. Die Übermittlung von Planungsvorgaben und anderen Informationen zwischen dem Planungsmodul und dem unbemannten Fluggerät kann über eine Funkverbindung erfolgen.

Das unbemannte Fluggerät kann für vertikale Starts und Landungen ausgelegt sein (VTOL, Vertical Take-off and Landing). In einer Ausführungsform ist das Fluggerät ein Quadkopter, also eine Drohne mit vier in die gleiche Richtung wirkenden Propellerantrieben. Die Steuereinheit kann dazu ausgelegt sein, die Flugrichtung des unbemannten Fluggeräts dadurch zu beeinflussen, dass die Drehzahl von Antriebsmotoren der Propellerantriebe angepasst wird.

Die Erfindung betrifft auch ein Steuersystem für ein unbemanntes Fluggerät, umfassend eine Steuereinheit und ein Planungsmodul. Die Steuereinheit ist dazu ausgelegt, Steuerkomponenten des Fluggeräts mit Steuerbefehlen anzusteuern. Die Steuereinheit ist dazu ausgelegt, die Steuerbefehle anhand von Planungsvorgaben zu ermitteln. Das Planungsmodul ist dazu ausgelegt, die Planungsvorgaben zu errechnen. Die Steuereinheit und das Planungsmodul werden mit einer gemeinsamen Zeitskala betrieben. Mit jeder Planungsvorgabe werden für eine Mehrzahl von Zeitpunkten Parametervorgaben für Flugparameter des Fluggeräts gesetzt. In einer ersten Steuerphase wird das Fluggerät gemäß einer ersten Planungsvorgabe betrieben, wobei die erste Planungsvorgabe Parametervorgaben für Zeitpunkte zwischen einem ersten Anfangszeitpunkt und einem ersten Endzeitpunkt setzt, wobei eine zweite Planungsvorgabe Parametervorgaben für Zeitpunkte zwischen einem zweiten Anfangszeitpunkt und einem zweiten Endzeitpunkt setzt, wobei der zweite Anfangszeitpunkt vor dem ersten Endzeitpunkt liegt. Die Steuereinheit ist dazu ausgelegt, zu einem Übergangszeitpunkt, der zwischen dem zweiten Anfangszeitpunkt und dem ersten Endzeitpunkt liegt, von der ersten Planungsvorgabe zu der zweiten Planungsvorgabe zu wechseln, sodass in einer zweiten Steuerphase das Fluggerät gemäß den Parametervorgaben der zweiten Planungsvorgabe betrieben wird.

Die Erfindung betrifft auch ein Computerprogrammprodukt oder einen Satz von Computerprogrammprodukten, umfassend Programmteile, welche, wenn geladen in einen Computer oder in untereinander vernetzte Computer, die mit einem erfindungsgemä-ßen Steuersystem verbunden sind, zur Durchführung des erfindungsgemäßen Verfahrens ausgelegt sind.

Die Offenbarung umfasst Weiterbildungen des Verfahrens mit Merkmalen, die im Zusammenhang des erfindungsgemäßen Steuersystems beschrieben sind. Die Offenbarung umfasst Weiterbildungen des Steuersystems mit Merkmalen, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines unbemannten Fluggeräts zur Durchführung des erfindungsgemäßen Verfahrens;

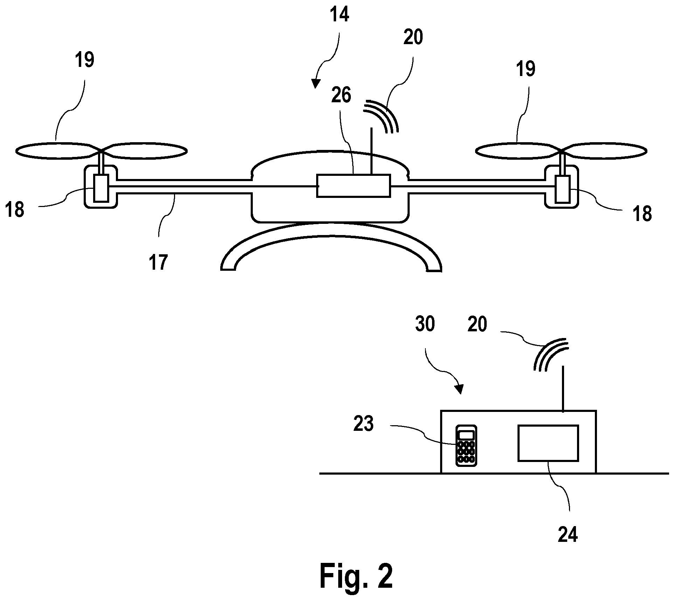

- Fig. 2:: ein unbemanntes Fluggerät unter der Kontrolle eines erfindungsgemäßen Steuersystems;
- Fig. 3:: eine schematische Darstellung des Steuersystems aus Fig. 2;
- Fig. 4:: eine vollendete Flugmission des unbemannten Fluggeräts aus Fig. 1;
- Fig. 5:: eine schematische Darstellung eines Zwischenzustands der Flugmission aus Fig. 4;
- Fig. 6:: eine grafische Darstellung einer erfindungsgemäßen Planungsvorgabe;
- Fig. 7:: einen Ausschnitt einer erfindungsgemäßen Planungsvorgabe;
- Fig. 8:: eine schematische Darstellung des Übergangs zwischen einer ersten Planungsvorgabe und einer zweiten Planungsvorgabe.

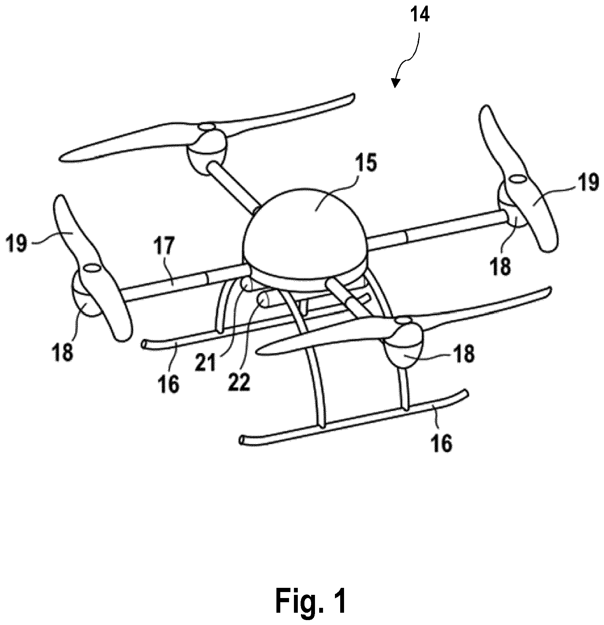

Ein in Fig. 1 gezeigtes unbemanntes Fluggerät 14 umfasst einen Rumpfkörper 15 mit Kufen 16, auf denen das Fluggerät steht, wenn es am Boden ist. Von dem Rumpfkörper 15 erstrecken sich vier Tragstreben 17 nach außen. Am äußeren Ende jeder Tragstrebe 17 ist ein Antriebsmotor 18 zum Antrieb eines Rotors 19 angeordnet. Zum Start werden die Rotoren 19 in gegenläufige Drehung versetzt, sodass das Fluggerät 14 senkrecht nach oben abhebt. Durch geeignete Ansteuerung der Antriebsmotoren 18 kann das Fluggerät 14 gezielt entlang gewünschter Flugbahnen gesteuert werden. An der Unterseite des Rumpfkörpers 15 sind zwei Sensoreinheiten 21, 22 aufgehängt, mit denen Messwerte über Umgebungsbedingungen im Umfeld des Fluggeräts 14 aufgezeichnet werden.

Das Fluggerät 14 ist mit einer Steuereinheit 26 ausgestattet, die dazu ausgelegt ist, mit Steuerbefehlen die Antriebsmotoren 18 anzusteuern. In einer Bodenstation 30 ist ein Planungsmodul 24 untergebracht, das über eine Funkverbindung 20 in Kommunikation mit der Steuereinheit 26 des Fluggeräts 14 steht. Die Bodenstation 30, bei der es sich um eine fest am Boden installierte Einrichtung oder auch um ein tragbares Gerät handeln kann, ist mit einer Eingabeeinheit 23 versehen, über die Daten in das Planungsmodul 24 eingegeben werden können.

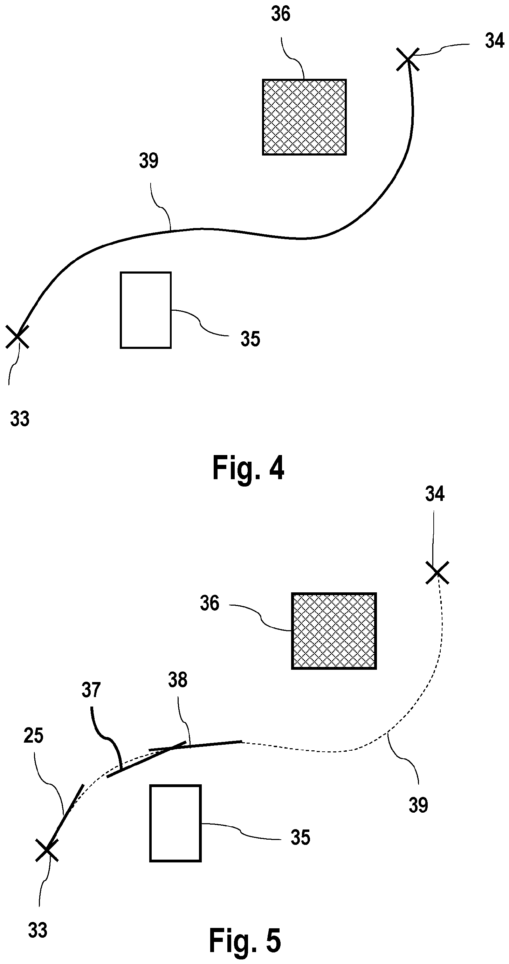

Mit der Eingabeeinheit 23 können dem Planungsmodul 24 Daten über eine vorgesehene Flugmission des Fluggeräts 14 zur Verfügung gestellt werden. Eine mögliche Flugmission könnte beispielsweise darin bestehen, dass das Fluggerät sich von einem Startpunkt 33 zu einem Zielpunkt 34 bewegen soll, siehe Fig. 4. Es ist nicht möglich, dass das Fluggerät 14 sich entlang eines geradlinigen Wegs von dem Standpunkt 33 zu dem Zielpunkt 34 bewegt, weil auf der Strecke ein Hochhaus 35 und ein Sperrgebiet 36 liegen, die umflogen werden müssen. In Fig. 4 ist der Zustand nach Abschluss der Flugmission dargestellt, bei dem retrospektiv die Flugroute 39 dargestellt ist, die das Fluggerät 14 tatsächlich zurückgelegt hat.

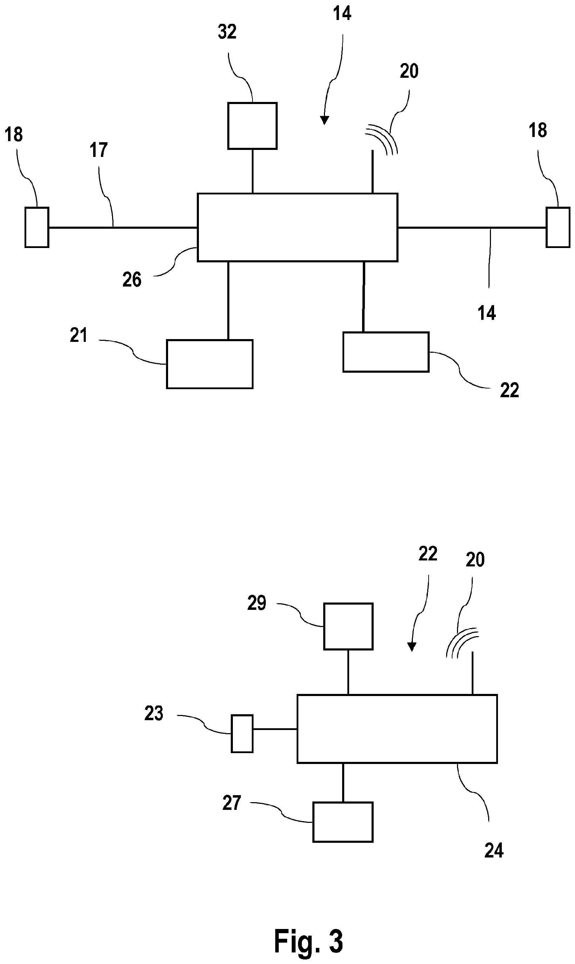

Im Vorfeld der Flugmission steht die tatsächlich zurückzulegende Strecke noch nicht fest, sondern dem Planungsmodul 24 liegen lediglich Daten zu dem Startpunkt 33 und dem Zielpunkt 34 vor. Das Planungsmodul 24 umfasst gemäß Fig. 3 eine Schnittstelle 27, über die das Planungsmodul 24 mit einem nicht dargestellten Datenserver kommuniziert. Über die Schnittstelle 27 empfängt das Planungsmodul 24 externe Daten, die für die Planung der Flugmission relevant sind. Dazu gehören geographische Informationen, wie beispielsweise eine Information über das Hochhaus 35, das umflogen werden muss. Dazu gehören Umgebungsinformationen, wie beispielsweise Informationen über das Wetter oder die Windrichtung. Dazu gehören organisatorische Informationen, wie beispielsweise eine Informationen über das Sperrgebiet 36, das umflogen werden muss.

Das Planungsmodul 24 errechnet anhand der vorliegenden Informationen eine Planungsvorgabe, die sich auf einen Ausschnitt der Flugmission bezieht. Die Planungsvorgabe, die Parametervorgaben für die Fluggeschwindigkeit, die Beschleunigung und die wahre Flugrichtung des Fluggeräts umfasst, wird über die Funkverbindung 20 an die Steuereinheit 26 des Fluggeräts 14 gesendet. Die Steuereinheit 26 des Fluggeräts 14 verarbeitet die Planungsvorgabe und leitet daraus Steuerbefehle für die Antriebsmotoren 18 des Fluggeräts 14 ab. Die Steuerbefehle werden in den Antriebsmotoren 18 umgesetzt, sodass das Fluggerät 14 eine Flugbewegung vollführt.

Eine initiale Planungsvorgabe 25 bezieht sich auf den Start und eine unmittelbar daran anschließende erste Phase der Flugmission, siehe Fig. 5. Nach Empfang und Umsetzung der initialen Planungsvorgabe 25 in der Steuereinheit 26 des Fluggeräts 14 hebt das Fluggerät ab und legt einen ersten Teil der Flugroute 39 zurück. Die Zeitspanne dieser ersten Flugphase wird in dem Planungsmodul 24 genutzt, um eine weitere Planungsvorgabe zu errechnen. Die weitere Planungsvorgabe wird an die Steuereinheit 26 des Fluggeräts 14 gesendet, bevor die mit der initialen Planungsvorgabe 25 abgedeckte Zeitspanne abgelaufen ist. Die Steuereinheit 26 des Fluggeräts wechselt zur nächsten Planungsvorgabe, sodass sich ein nahtloser Übergang ergibt, der über das Ende der initialen Planungsvorgabe 25 hinausreicht.

Durch eine Abfolge einer Mehrzahl von Planungsvorgaben wird die gesamte Zeitspanne der Flugmission zwischen dem Startpunkt 33 und dem Zielpunkt 34 abgedeckt. Für jede der Planungsvorgaben gibt es eine Zeitspanne innerhalb der Flugmission, innerhalb derer das Fluggerät 14 anhand der betreffenden Planungsvorgabe gesteuert wird. Gegen Ende der Zeitspanne erfolgt ein Wechsel zu einer nachfolgenden Planungsvorgabe, sodass die nachfolgende Planungsvorgabe die aktuelle Planungsvorgabe wird und sodass die aktuelle Planungsvorgabe eine vergangene Planungsvorgabe wird. Dies wird nachfolgend anhand einer ersten Planungsvorgabe 37 einer zweiten Planungsvorgabe 38, die in einem mittleren Abschnitt der Flugmission liegen, näher erläutert.

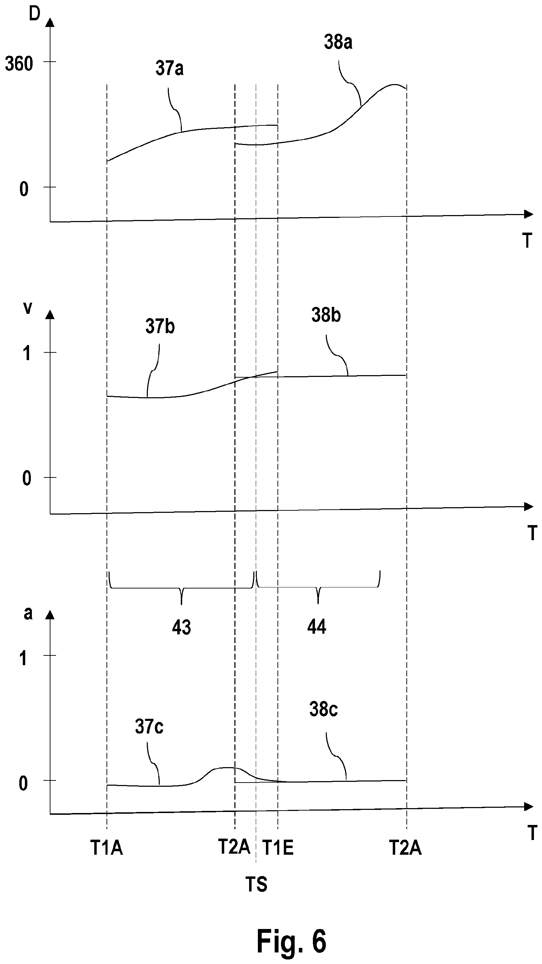

Gemäß Fig. 6 umfasst die erste Planungsvorgabe 37 eine Parametervorgabe 37a für die wahre Flugrichtung D des Fluggeräts, eine Parametervorgabe 37b für die Geschwindigkeit v des Fluggeräts 14 und eine Parametervorgabe 37c für die Beschleunigung a des Fluggeräts 14. Die erste Planungsvorgabe 37 erstreckt sich von einem ersten Anfangszeitpunkt T1A bis zu einem ersten Endzeitpunkt T1E. Die zweite Planungsvorgabe 38 umfasst ebenfalls eine Parametervorgabe 38a für die wahre Flugrichtung D, eine Parametervorgabe 38b für die Geschwindigkeit v des Fluggeräts 14 sowie eine Parametervorgabe 38c für die Beschleunigung a des Fluggeräts 14. Die zweite Planungsvorgabe 38 erstreckt sich von einem zweiten Anfangszeitpunkt T2A bis zu einem zweiten Endzeitpunkt T2E.

In Fig. 6 sind beispielhaft mögliche Verläufe für die Parametervorgaben 37a, 37b, 37c, 38a, 38b, 38c dargestellt. Die wahre Flugrichtung D ist auf einer Gradskala von 0° bis 360° schematisch dargestellt. Die Geschwindigkeit v und die Beschleunigung a sind auf einer relativen Skala zwischen 0 und 1 schematisch dargestellt, wobei der Wert 1 jeweils für die maximale Geschwindigkeit v bzw. die maximale Beschleunigung a des Fluggeräts 14 steht.

In der Zeitspanne von T1A bis T2A, in der das Fluggerät 14 gemäß den Parametervorgaben der ersten Planungsvorgabe 37 gesteuert wird, errechnet das Planungsmodul 24 die zweite Planungsvorgabe 38. Bei der Berechnung fließen die von Anfang an vorliegenden Informationen über die gewünschte Flugmission ein. Weiterhin fließen Daten ein, die während des bisherigen Teils der Flugmission über die Funkverbindung 20 von der Steuereinheit 26 des Fluggeräts 14 an das Planungsmodul 24 übermittelt wurden. Zu diesen Daten gehören insbesondere Informationen über die tatsächliche Position des Fluggeräts 14 zu verschiedenen Zeitpunkten des bisherigen Teils der Flugmission. Zu den Informationen können auch mit den Sensoreinheiten 21, 22 aufgenommene Daten gehören. In einer Ausführungsform gehört zu den Sensoreinheiten 21, 22 ein Lidar-Sensor, mit dem Informationen über Hindernisse in der Umgebung gewonnen werden. Hindernisse in der Umgebung des Fluggeräts 14 sind eine relevante Information für die Ermittlung einer nachfolgenden Planungsvorgabe. Auch aktualisierte externe Daten, die das Planungsmodul 24 über die Schnittstelle 27 erhalten hat, können in die Berechnung einfließen.

Das Errechnen der zweiten Planungsvorgabe 38 in dem Planungsmodul 24 ist vor dem zweiten Anfangszeitpunkt T2A abgeschlossen, sodass die Planungsvorgabe 38 als in sich geschlossener Satz von Parametervorgaben an die Steuereinheit 26 des Fluggeräts 14 übermittelt werden kann. Zu einem Zeitpunkt TS, der nach dem zweiten Anfangszeitpunkt T2A und vor dem ersten Endzeitpunkt T1E liegt, wechselt die Steuereinheit 26 von der ersten Planungsvorgabe 37 zu der zweiten Planungsvorgabe 38. Ab dem Zeitpunkt TS wird das Fluggerät 14 demnach gemäß den Parametervorgaben der zweiten Planungsvorgabe 38 angesteuert. Die erste Planungsvorgabe 37 ist ab dem Zeitpunkt TS eine vergangene Planungsvorgabe. Es gibt demnach eine erste Steuerphase 43, in der das Fluggerät 14 gemäß der ersten Planungsvorgabe 37 betrieben wird, sowie eine zweite Steuerphase 44, in der das Fluggerät 14 gemäß der zweiten Planungsvorgabe 38 betrieben wird.

Mit der wahren Flugrichtung D, der Geschwindigkeit v und der Beschleunigung a enthalten die Planungsvorgaben 37, 38 Parametervorgaben für die wesentlichen Flugparameter des Fluggeräts, auf die über die Antriebsmotoren 18 Einfluss genommen werden kann. Die Planungsvorgaben 37, 38 machen keine Vorgaben für die Position des Fluggeräts 14 zu bestimmten Zeitpunkten. Die tatsächliche Position des Fluggeräts 14 ist vielmehr ein Parameter, der sich erst durch die Umsetzung der Planungsvorgaben ergibt und der demnach lediglich indirekt von den Planungsvorgaben abhängt. Umgekehrt hingegen ist die tatsächliche Position des Fluggeräts zu vergangenen Zeitpunkten der Flugmission eine Information, die das Planungsmodul 24 über die Funkverbindung 20 erhält und die bei der Erstellung einer nachfolgenden Planungsvorgabe einfließt.

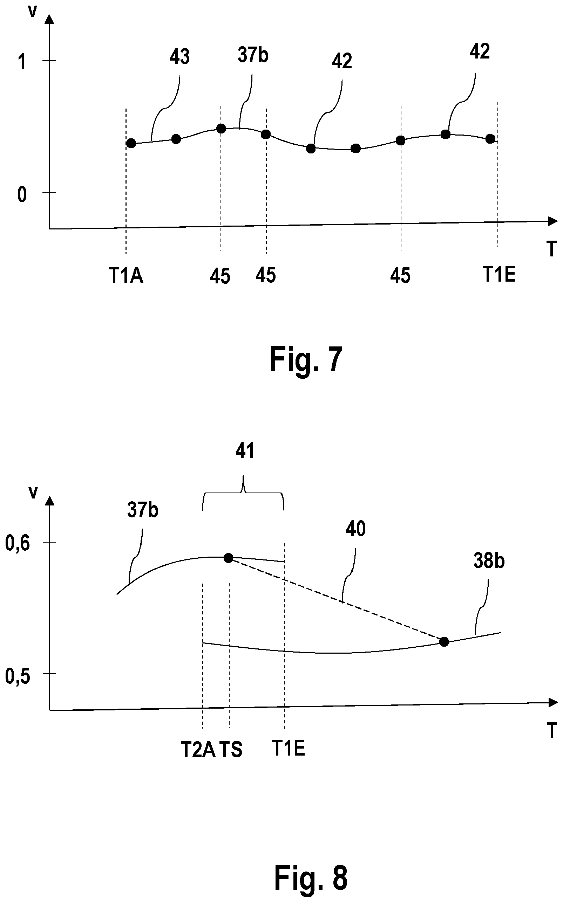

In Fig. 7 ist am Beispiel der Parametervorgabe 37b für die Geschwindigkeit v schematisch dargestellt, dass die Parametervorgaben errechnet werden, indem innerhalb der Zeitspanne zwischen dem Anfangszeitpunkt T1A und dem Endzeitpunkt T1E der ersten Planungsvorgabe 37 eine Mehrzahl von Zeitpunkten 45 Stützpunkte 42 bestimmt werden, für die konkrete Werte für die Parametervorgabe errechnet werden. In dem Beispiel der Fig. 7 sind es neun Stützpunkte 42, die äquidistant über die Zeit verteilt sind.

Indem die Berechnung nur für die Stützpunkte 42 durchgeführt wird, ergeben sich aus der Berechnung zunächst lediglich Parametervorgaben für diskrete Zeitpunkte innerhalb der Zeitspanne. Eine kontinuierliche Parametervorgabe wird daraus abgeleitet, indem die Stützpunkte 42 mit einer Spline-Funktion 43 interpoliert werden. Die Spline-Funktion 43 wird an die Steuereinheit 24 übertragen und dient dort als Parametervorgabe für die Ermittlung der Steuerbefehle.

Das Planungsmodul 24 ist mit einem GPS-Modul 29 verbunden. Die Planungsvorgaben 37, 38 werden jeweils mit Zeitstempeln versehen, die der von dem GPS-Modul 29 verwendeten Zeitskala entsprechen.

Das Fluggerät 14 ist ebenfalls mit einem GPS-Modul 32 ausgestattet, über das das Fluggerät 14 eine Information über seine tatsächliche Position gewinnt. Das GPS-Modul 32 des Fluggeräts 14 wird mit derselben Zeitskala betrieben wie das GPS-Modul 29 des Planungsmoduls 24. Ist eine Planungsvorgabe auf diese gemeinsame Zeitskala bezogen, so ist sichergestellt, dass eine in der Planungsvorgabe erhaltene Parametervorgabe in dem Fluggerät 14 zu dem Zeitpunkt umgesetzt wird, zu der es von dem Planungsmodul 24 vorgesehen war. Dies ist ein Unterschied zu bisherigen Steuerverfahren, bei denen neue Planungsvorgaben einfach ab dem Zeitpunkt umgesetzt wurden, zu dem sie bei dem Fluggerät 14 eingegangen sind, und bei denen es deswegen von Unwägbarkeiten der Übertragung abhängt, wann die tatsächliche Umsetzung von Planungsvorgaben erfolgt.

In Fig. 8 ist der Überlappungszeitraum 41 zwischen dem Anfangszeitpunkt T2A der zweiten Planungsvorgabe 38 und dem Endzeitpunkt T1E der ersten Planungsvorgabe 37 vergrößert dargestellt. In dem Überlappungszeitraum 41 hat die erste Parametervorgabe 37b für die Geschwindigkeit v einen Abstand zu der zweiten Parametervorgabe 38b für die Geschwindigkeit v. Würde die Steuereinheit 26 zum Zeitpunkt TS schlagartig von der ersten Parametervorgabe 37b zu der zweiten Parametervorgabe 38b übergehen, so wäre dies mit einer sprunghaften Änderung der Steuerbefehle für die Antriebsmotoren 18 des Fluggeräts 14 verbunden. Solche sprunghaften Änderungen sind unerwünscht und können das Fluggerät 14 einen instabilen Flugzustand bringen.

Erfindungsgemäß ist deswegen eine Begrenzung der Änderungsrate in Form einer Rampe 40 für den Übergang zwischen der ersten Planungsvorgabe 37 und der zweiten Planungsvorgabe 38 vorgesehen. Durch die Rampe 40 ist sichergestellt, dass der Übergang von der ersten Planungsvorgabe 37 zu der zweiten Planungsvorgabe 38 auf sanfte Weise erfolgt, sodass das Fluggerät 14 nicht übermäßig belastet wird.

Tritt eine Situation ein, in der der Endzeitpunkt der ersten Planungsvorgabe 37 erreicht ist, ohne dass der Steuereinheit 26 eine nachfolgende Planungsvorgabe zur Verfügung steht, kann die Steuereinheit 26 das Fluggerät 14 in einen Sicherheitszustand bringen. Der Sicherheitszustand sollte so gestaltet sein, dass keine Gefahr von dem Fluggerät 14 ausgeht und dass auch das Fluggeräts 14 selbst keiner Gefahr ausgesetzt ist. Beispielsweise kann die Steuereinheit 26 dazu ausgelegt sein, dass Fluggerät 14 in einen statischen Zustand zu bringen, in dem es in seiner Position bleibt. Nach Empfang einer neuen Planungsvorgabe kann die Steuereinheit 26 an den vorherigen Betrieb anknüpfen und die Flugmission fortsetzen.

## Patentansprüche

1. Verfahren zum Steuern eines unbemannten Fluggeräts (14), bei dem Steuerkomponenten (18) des Fluggeräts (14) mit Steuerbefehlen angesteuert werden, die von einer Steuereinheit (26) an die Steuerkomponenten (18) gesendet werden, bei dem die Steuereinheit (26) die Steuerbefehle anhand von Planungsvorgaben (37, 38) ermittelt werden, wobei die Planungsvorgaben (37, 38) in einem Planungsmodul (24) errechnet werden, wobei die Steuereinheit (26) und das Planungsmodul (24) mit einer gemeinsamen Zeitskala (29, 32) betrieben werden, wobei mit jeder Planungsvorgabe (37, 38) für eine Mehrzahl von Zeitpunkten Parametervorgaben (37a, 37b, 37c, 38a, 38b, 38c) für Flugparameter des Fluggeräts (14) gesetzt werden, wobei in einer ersten Steuerphase (43) das Fluggerät (14) gemäß einer ersten Planungsvorgabe (37) betrieben wird, wobei die erste Planungsvorgabe (37) Parametervorgaben (37a, 37b, 37c) für Zeitpunkte zwischen einem ersten Anfangszeitpunkt (T1A) und einem ersten Endzeitpunkt (T1E) setzt, wobei eine zweite Planungsvorgabe (38) Parametervorgaben (38a, 38b, 38c) für Zeitpunkte zwischen einem zweiten Anfangszeitpunkt (T2A) und einem zweiten Endzeitpunkt (T2E) setzt, wobei der zweite Anfangszeitpunkt (T2A) vor dem ersten Endzeitpunkt (T1E) liegt, wobei zu einem Übergangszeitpunkt (TS), der zwischen dem zweiten Anfangszeitpunkt (T2A) und dem ersten Endzeitpunkt (T1E) liegt, die Steuereinheit (26) von der ersten Planungsvorgabe (37) zu der zweiten Planungsvorgabe (38) wechselt, sodass in einer zweiten Steuerphase (44) das Fluggerät (14) gemäß den Parametervorgaben (38a, 38b, 38c) der zweiten Planungsvorgabe (38) betrieben wird.

2. Verfahren nach Anspruch 1, wobei in der ersten Planungsvorgabe (37) und der zweiten Planungsvorgabe (38) die Parametervorgaben (37a, 37b, 37c, 38a, 38b, 38c) mit Zeitpunkten verknüpft sind, die auf der gemeinsamen Zeitskala (29, 32) definiert sind.

3. Verfahren nach Anspruch 1 oder 2, wobei das Planungsmodul (24) die zweite Planungsvorgabe (38) in der ersten Steuerphase (43) errechnet.

4. Verfahren nach einem der Ansprüche 1 bis 3, wobei der Übergangszeitpunkt (TS) vor dem ersten Endzeitpunkt (T1E) liegt.

5. Verfahren nach einem der Ansprüche 1 bis 4, wobei der Übergangszeitpunkt (TS) unmittelbar nach einem Zeitpunkt liegt, zu dem die zweite Planungsvorgabe (38) der Steuereinheit (26) zur Verfügung gestellt wird.

6. Verfahren nach einem der Ansprüche 1 bis 5, wobei das Planungsmodul (24) externe Daten verarbeitet, um die Planungsvorgabe (37, 38) zu errechnen.

7. Verfahren nach einem der Ansprüche 1 bis 6, wobei das Planungsmodul (24) von der Steuereinheit (26) des Fluggeräts (14) erhaltene Daten verarbeitet, um die Planungsvorgabe (37, 38) zu errechnen.

8. Verfahren nach Anspruch 7, wobei das Planungsmodul (24) von der Steuereinheit (26) des Fluggeräts erhaltene Daten über die tatsächliche Position des Fluggeräts (14) verarbeitet, um die Planungsvorgabe (37, 38) zu errechnen.

9. Verfahren nach einem der Ansprüche 1 bis 8, wobei das Planungsmodul (24) diskrete Parametervorgaben (37a, 37b, 37c, 38a, 38b, 38c) für diskrete Zeitpunkte innerhalb der Zeitspanne zwischen dem Anfangszeitpunkt (T1A, T2A) und dem Endzeitpunkt (T1E, T2E) einer Planungsvorgabe (37, 38) errechnet.

10. Verfahren nach Anspruch 9, wobei die diskreten Parametervorgaben (37a, 37b, 37c, 38a, 38b, 38c) mit einer Spline-Funktion interpoliert werden, um eine kontinuierliche Planungsvorgabe (37, 38) zu erhalten.

11. Verfahren nach einem der Ansprüche 1 bis 10, wobei die Steuereinheit (26) den Übergang von der ersten Planungsvorgabe (37) zu der zweiten Planungsvorgabe (38) unter Anwendung einer vorgegebenen begrenzten Änderungsrate (40) vollzieht.

12. Verfahren nach einem der Ansprüche 1 bis 11, wobei die Steuereinheit (26) dazu ausgelegt ist, das Fluggerät (14) in einen Sicherheitszustand zu bringen, wenn der Steuereinheit (26) zum ersten Endzeitpunkt (T1E) keine zweite Planungsvorgabe (38) vorliegt.

13. Steuersystem für ein unbemanntes Fluggerät (14), umfassend eine Steuereinheit (26) und ein Planungsmodul (24), wobei die Steuereinheit dazu ausgelegt ist, Steuerkomponenten (18) des Fluggeräts (14) mit Steuerbefehlen anzusteuern, und wobei die Steuereinheit (26) dazu ausgelegt ist, die Steuerbefehle anhand von Planungsvorgaben (37, 38) zu ermitteln, wobei das Planungsmodul (24) dazu ausgelegt ist, die Planungsvorgaben (37, 38) zu errechnen, wobei die Steuereinheit (26) und das Planungsmodul (24) mit einer gemeinsamen Zeitskala (29, 32) betrieben werden, wobei mit jeder Planungsvorgabe (37, 38) für eine Mehrzahl von Zeitpunkten Parametervorgaben (37a, 37b, 37c, 38a, 38b, 38c) für Flugparameter des Fluggeräts (14) gesetzt werden, wobei in einer ersten Steuerphase (43) das Fluggerät (14) gemäß einer ersten Planungsvorgabe (37) betrieben wird, wobei die erste Planungsvorgabe (37) Parametervorgaben (37a, 37b, 37c) für Zeitpunkte zwischen einem ersten Anfangszeitpunkt (T1A) und einem ersten Endzeitpunkt (T1E) setzt, wobei eine zweite Planungsvorgabe (38) Parametervorgaben (38a, 38b, 38c) für Zeitpunkte zwischen einem zweiten Anfangszeitpunkt (T2A) und einem zweiten Endzeitpunkt (T2E) setzt, wobei der zweite Anfangszeitpunkt (T2A) vor dem ersten Endzeitpunkt (T1E) liegt, wobei die Steuereinheit (26) dazu ausgelegt ist, zu einem Übergangszeitpunkt (TS), der zwischen dem zweiten Anfangszeitpunkt (T2A) und dem ersten Endzeitpunkt (T1E) liegt, von der ersten Planungsvorgabe (37) zu der zweiten Planungsvorgabe (38) zu wechseln, sodass in einer zweiten Steuerphase (44) das Fluggerät (14) gemäß den Parametervorgaben (38a, 38b, 38c) der zweiten Planungsvorgabe (38) betrieben wird.

14. Computerprogrammprodukt oder Satz von Computerprogrammprodukten, umfassend Programmteile, welche, wenn geladen in einen Computer oder in untereinander vernetzte Computer, die mit einem erfindungsgemäßen Steuersystem verbunden sind, zur Durchführung des Verfahrens nach einem der Ansprüche 1 bis 12 ausgelegt sind.
